(19) Europäisches Patentamt
European Patent Office
Office européen des brevets

(11) **EP 0 890 503 A1**

(12) **EUROPÄISCHE PATENTANMELDUNG**

(43) Veröffentlichungstag:
13.01.1999 Patentblatt 1999/02

(51) Int. Cl.$^6$: **B62J 6/04**

(21) Anmeldenummer: 97810467.7

(22) Anmeldetag: 11.07.1997

(84) Benannte Vertragsstaaten:
AT BE CH DE DK ES FI FR GB GR IE IT LI LU MC
NL PT SE
Benannte Erstreckungsstaaten:
AL LT LV RO SI

(71) Anmelder:
IMS Industrial Micro System AG
8542 Wiesendangen (CH)

(72) Erfinder:
• Jornot, Erich
8472 Seuzach (CH)
• Frei, Albert
8542 Wiesendangen (CH)

(74) Vertreter:
Patentanwälte Breiter + Wiedmer AG
Seuzachstrasse 2
Postfach 366
8413 Neftenbach/Zürich (CH)

(54) **Rückleuchte für Fahrzeuge**

(57) Eine Rückleuchte (10) für Fahrzeuge, insbesondere für Fahrräder, hat wenigstens eine Leuchtdiode (30,32), welche als Fahrlichtquelle (32) von einem Generator und als Standlichtquelle (30) von einem integrierten Elektronikmodul (25) mit Kondensator gespeist ist. Weiter umfasst die Rückleuchte (10) ein Rückstrahlelement (14), eine Halteplatte (20) und eine transparente Abdeck-Kalotte (12) mit optischen Elementen. Benachbart einer Standlicht-LED (30) sind ein erster Spiegel (26) mit zwei durch eine erste Scheitellinie (42) getrennten Ausbuchtungen (52) und einer diese gekrümmte Scheitellinie unterbrechenden Öffnung (31), und unmittelbar nach dieser Öffnung (31) ein zweiter Spiegel (28) mit zwei durch eine auf der Ebene (E) der ersten Scheitellinie (26) und der Standlicht-LED (30) liegenden, geraden zweiten Scheitellinie (44) getrennte Scheitelflächen (58) angeordnet. Die bezüglich der Ebene (E) plansymmetrisch ausgebildeten Ausbuchtungen (52) mit der Öffnung (31) und Scheitelflächen (58) sind zur Erzielung einer vorgegebenen Verteilung der Lichtabstrahlung mathematisch berechnet und definiert. Die Reflexion der Lichtabstrahlung in Richtung der Ebene (E) erfolgt nur in einem beschränkten, kleinen Winkel, ausserhalb der Ebene (E) in einer mit zunehmendem Ablenkungswinkel abnehmender Intensität ($I_v$).

Fig. 3

**Beschreibung**

Die Erfindung bezieht sich auf eine Rückleuchte für Fahrzeuge, insbesondere für Fahrräder, mit Wenigstens einer Leuchtdiode, welche als Fahrlichtquelle von einem Generator und als Standlichtquelle von einem integrierten Elektronikmodul mit Kondensator gespeist ist, einem Rückstrahlelement, einer Halteplatte und einer transparenten Abdeck-Kalotte mit optischen Elementen.

Rückleuchten für Fahrräder sind beispielsweise aus der WO 91/11896 bekannt. Diese Rückleuchte für ein Fahrzeug ist mit einer Fahrlichtquelle und einer lichtschwächeren Standlichtquelle ausgerüstet. Die Standlichtquelle ist eine Leuchtdiode, welche kurz auch LED (lichtemittierende Diode) genannt wird.

Ein Kleingenerator, auch Dynamo genannt, erzeugt, im normalen Fahrbetrieb auf dem Pneu laufend, nicht nur die für die Fahrlichtquelle notwendige Energie, gleichzeitig wird ein Kondensator eines in der Rückleuchte integrierten Elektronikmoduls aufgeladen. Dieser kann eine als Standlicht dienende Leuchtdiode während einer allerdings nicht allzu langen Zeitperiode speisen. Aus der erwähnten WO 91/11896 sind auch verschiedene elektronische Schaltungen für den Betrieb einer Fahr- und/oder Standlichtquelle bekannt.

Zur Vergrösserung der Verkehrssicherheit ist nicht nur die absolute Helligkeit der Lichtquelle einer Rückleuchte von Bedeutung, sondern in erster Linie die Verteilung der Lichtabstrahlung im Raum. Ein Fahrradfahrer muss möglichst aus allen Richtungen gesehen werden, insbesondere auch von hinten. Dies wird nach dem bekannten Stand der Technik oft dadurch erreicht, dass nach hinten eine zusätzliche Lichtquelle eingesetzt wird, wobei deren Licht mit optischen Elementen, beispielsweise einem Reflektor und einer Sammellinse, im grössten Gefahrenbereich gebündelt wird und dadurch auch von weitem sofort erkennbar ist.

Bedrahtete Leuchtdioden an sich sind seit langem bekannt. Diese erzeugen meistens eine schmalwinklige Abstrahlung, welche für den beschriebenen Zweck durch geeignete optische Elemente, beispielsweise Streulinsen, verbreitert wird. Oberflächenmontierte Leuchtdioden, sogenannte SMD (surface mounted devices), insbesondere in Chip-Ausführung, erzeugen eine breitwinklige Abstrahlung. Die Verteilung ihrer Lichtintensität in einer vertikalen Schnittebene entspricht ungefähr einer Cosinusfunktion. Die Lichtintensität ist senkrecht zur Bestückungsebene der Leuchtdiode am grössten: $I_v(0°)$. Die Intensitätsverteilung kann mit der Formel

$$I_v(\varphi) = I_v(0°) \cdot \cos\varphi$$

charakterisiert werden.

In den meisten Ländern bestehen Zulassungsnormen für Fahrzeugrückleuchten. Bezüglich der Fahrrichtung nach hinten muss in einem Horizontalband von etwa ±10° Höhe die grösste Lichtintensität erreicht werden. Nach diesen Abstrahlungsnormen muss seitlich in einem Winkel von ± 10° die grösste Lichtintensität erreicht werden. Bis zu einem Winkel von ± 45° kann die Lichtintensität kontinuierlich oder stufenweise, jedoch verhältnsmässig wenig, abnehmen. Bis zu einem Winkel von 110°, bezogen auf die Rückwärtsrichtung, muss die Fahrzeugrückleuchte noch gut erkennbar sein.

In der DE,A1 4224061 wird ein Lichtgürtel zur im wesentlichen horizontalen Abstrahlung des von einer Leuchtdiode erzeugten Lichtes beschrieben. Dieser ist teilweise als Streugürtel ausgebildet. Weiter befindet sich im Innern der Fahrzeugrückleuchte ein Streukörper, der die Leuchtdiode ringförmig eng umgibt. Diese Fahrzeugrückleuchte verbessert die Sichtbarkeit eines Fahrrades nach hinten und zur Seite durch gezielte Bündelung und/oder Verteilung der Lichtabstrahlung in horizontaler Richtung, insbesondere auch bei Verwendung lichtschwächerer Leuchtdioden als Standlicht. Innerhalb eines Fahrlichtbereiches ist eine Glühlampe mit Reflektor und Linsenanordnung ausgebildet, welches als Fahrlicht die Sichtbarkeit nach hinten verstärkt.

Die Erfinder haben sich die Aufgabe gestellt, eine Rückleuchte für Fahrzeuge der eingangs genannten Art zu schaffen, welche die Verteilung der Lichtabstrahlung der lichtschwächeren Standlichtquelle weiter vereinfacht und verbessert. Weiter sollen die Standlicht- und Fahrlichtquelle optimal angeordnet und eine gut schützende Abdeck-Kalotte vorgesehen sein.

Die Aufgabe wird erfindungsgemäss dadurch gelöst, dass benachbart einer Standlicht-LED ein erster Spiegel mit zwei durch eine erste Scheitellinie getrennten Ausbuchtungen und einer diese gekrümmte Scheitellinie unterbrechenden Öffnung, und unmittelbar nach dieser Öffnung ein zweiter Spiegel mit je durch eine auf der Ebene der ersten Scheitellinie und der Standlicht-LED liegenden, geraden zweiten Scheitelline getrennte Scheitelflächen angeordnet sind, wobei die bezüglich der Ebene plansymmetrisch ausgebildeten Ausbuchtungen mit der Öffnung und Scheitelflächen zur Erzielung einer vorgegebenen Verteilung der Lichtstrahlung mathematisch berechnet und definiert sind, und die Reflexion der Lichtabstrahlung in Richtung der Ebene nur in einem beschränkten, kleinen Winkel, ausserhalb der Ebene in einer mit zunehmendem Ablenkungswinkel abnehmender Intensität, erfolgt. Spezielle und weiterbildende Ausführungsformen der Erfindung sind Gegenstand von abhängigen Patentansprüchen.

Mit der erfindungsgemäss besonders kompakten Rückleuchte für Fahrzeuge ist eine wirkungsvolle Verteilung der Lichtabstrahlung der Standlicht-LED in unterschiedlichen Richtungen mit grosser Präzision und Effizienz möglich. Im ersten Spiegel ist die Ausbildung einer Scheitellinie, welche ebenfalls als Kamm bezeichnet werden kann, bedeutungsvoll. Für die verhältnismässig schwache Lichtquelle sind keine komplizierten optischen Elemente wie Lichtgürtel, Streukörper, Linsen und dgl. notwendig. Die Lichtabstrahlung der Standlicht-LED wird direkt auf eine metallische Reflexionsfläche geleitet, wobei die geometrische Raumform der beiden plansymmetrischen Ausbuchtungen des ersten Spiegels und der beiden ebenfalls plansymmetrischen Scheitelflächen des zweiten Spiegels mathematisch berechnet und definiert sind. Der Begriff „metallische Oberfläche" schliesst auch einen metallisch verspiegelten Kunststoff ein. So wird die notwendige Verteilung der Lichtabstrahlung direkt erreicht:

- In Richtung der durch Scheitellinien gebildeten Ebene (bei montierter Rückleuchte in senkrechter Richtung) wird auch ohne weitere konstruktive Massnahmen in der Abdeck-Kalotte ein etwa ±15° breites, maximal beleuchtetes Band erzeugt. Dafür sind die geometrische Gestaltung sowohl der Ausbuchtungen im ersten Spiegel als auch der Scheitelflächen im zweiten Spiegel verantwortlich.

- Die senkrecht zur Ebene durch die Scheitellinien, bei montierter Rückleuchte seitlich, abnehmende Lichtintensität wird wiederum durch die für den Rückwärts- und Seitrückwärtsbereich berechneten Ausbuchtungen des ersten Spiegels und die für den Seitenbereich berechneten Scheitelflächen im zweiten Spiegel verantwortlich.

Die Ausbuchtungen des ersten Spiegels erzeugen in Richtung der Ebene der ersten und zweiten Scheitellinien eine Reflexionsabstrahlung in einem Winkel von etwa ± (10 - 20)°, insbesondere von etwa ± 15°. Senkrecht zu dieser Ebene wird eine Reflexionsabstrahlung in einem Winkel von ± (0 - 45)° erzeugt. Es ist bereits erwähnt worden, dass die Lichtintensität mit zunehmendem Winkel abnimmt. Die Winkelangaben beziehen sich auf die Fahrrichtung des Fahrzeugs mit der montierten Rückleuchte bzw. auf die Ebene der Scheitellinien von deren erstem und zweitem Spiegel.

Die Ausbuchtungen des ersten Spiegels sind so berechnet und definiert, dass senkrecht zur Ebene durch die beiden Scheitellinien und die LED 35 - 55%, vorzugsweise etwa 45% der gesamten Lichtabstrahlung der Standlicht-LED bis zu einem Winkel von etwa ± 15° reflektiert werden. In der gleichen Ebene werden 25 - 40%, vorzugsweise etwa 35%, der gesamten Lichtabstrahlung der Standlicht-LED in einem Winkel von ± (15 - 45)° reflektiert. Die restlichen 10 - 30%, vorzugsweise etwa 20%, der gesamten Lichtabstrahlung der Standlicht-LED durchtreten die Öffnung und treffen auf dem zweiten Spiegel auf. Diese Verhältnisse zeigen deutlich, dass auch bei der lichtschwächeren Standlicht-LED der grösste Teil des Lichtflusses nach hinten reflektiert wird, während die seitliche Lichtintensität deutlich abnimmt und im Reflexionsbereich des zweiten Spiegels ein Minimum erreicht.

Die Öffnung im ersten Spiegel ist vorzugsweise so dimensioniert, dass die auf der Ebene durch die Scheitellinien und die LED verlaufenden Lichtstrahlen, bei montierter Rückleuchte in senkrechter Richtung, bis zu einem Winkel von ± (10 - 20)°, vorzugsweise bis etwa ± 15° durchlässt. Senkrecht zu dieser Ebene verlaufende Lichtstrahlen, bei montierter Rückleuchte in horizontaler Richtung, werden bis zu einem Winkel von ± (15 - 45)°, vorzugsweise bis etwa ± 30°, durchgelassen. Geometrisch ist die Öffnung im ersten Spiegel zweckmässig schlitzförmig, rechteckig, quadratisch, elliptisch oder kreisförmig ausgebildet. Von wesentlicher Bedeutung ist, dass nicht nur die beiden Spiegel, sondern auch die Öffnung bezüglich der Ebene durch die Scheitellinien und die Standlicht-LED plansymmetrisch ausgebildet ist.

Die durch die Öffnung auf die Scheitelflächen des zweiten Spiegels auftreffenden Lichtstrahlen werden senkrecht zur Ebene durch die Scheitellinien und die Standlicht-LED in einem Winkel von vorzugsweise ± (45 - 110)°, reflektiert. Dies gewährleistet eine einwandfreie seitliche Sichtbarkeit des mit der Rückleuchte bestückten Fahrzeuges.

Obwohl die Lichtabstrahlung der lichtschwachen Standlicht-LED derart optimiert ist, dass sie auf dem Fahrzeug montiert nach hinten mit wesentlich höherer Lichtintensität abstrahlt als seitlich, genügt die Abstrahlung nach hinten den Anforderungen in der Regel nicht. Bevorzugt auf dem Träger der lichtschwachen Standlicht-LED wird deshalb, mit entgegengesetzter Lichtabstrahlrichtung zusätzlich wenigstens eine lichtstarke Fahrlicht-LED montiert. Dadurch kann die Lichtabstrahlung in dieser Richtung durch Direktabstrahlung wesentlich erhöht werden, insbesondere wenn zusätzlich in der transparenten Abdeck-Kalotte ein Linsensystem eingesetzt wird, welches das Licht nach hinten bündelt.

Die schlagempfindliche Abdeck-Kalotte kann nach dem bekannten Stand der Technik durch wenigstens einen in der Rückleuchte verankerten Schutzbügel gesichert werden. Die Wirkung kann nochmals wesentlich erhöht werden, indem wenigstens einer der Schutzbügel in der Halteplatte für die Rückleuchte verankert ist. Derart werden die Schutzbügel bei einem Schlag von der mechanischen Festigkeit der Rückleuchte unabhängig und sind wesentlich stabiler.

Die Vorteile der vorliegenden Erfindung können wie folgt zusammengefasst werden:

- Die Reflexion der Lichtabstrahlung der kondensatorgespeisten Standlicht-LED erfolgt auf mathematisch berechneten und definierten Ausbuchtungen eines ersten und eines zweiten Spiegels.
- Die Rückleuchte ist in ihrem funktionellen Teil dank der massiven Spiegel ausserordentlich stabil. Die Lichtverteilung erfolgt über diese Spiegel, nicht über optische Elemente der Abdeck-Kalotte.

Die Erfindung wird anhand von in der Zeichnung dargestellten Ausführungsbeispielen, welche auch Gegenstand von abhängigen Patentansprüchen sind, näher erläutert. Es zeigen schematisch:

- Fig. 1 eine perspektivische Ansicht einer Rückleuchte für ein Fahrzeug,
- Fig. 2 eine Seitenansicht von Fig. 1,
- Fig. 3 eine Seitenansicht der optischen Elemente einer Rückleuchte,
- Fig. 4 eine Draufsicht auf den ersten und zweiten Spiegel einer Rückleuchte,
- Fig. 5 eine Ansicht von hinten des Spiegelsystems gemäss Fig. 4, und
- Fig. 6 einen Vertikalschnitt durch die reflektierende Oberfläche eines ersten Spiegels.

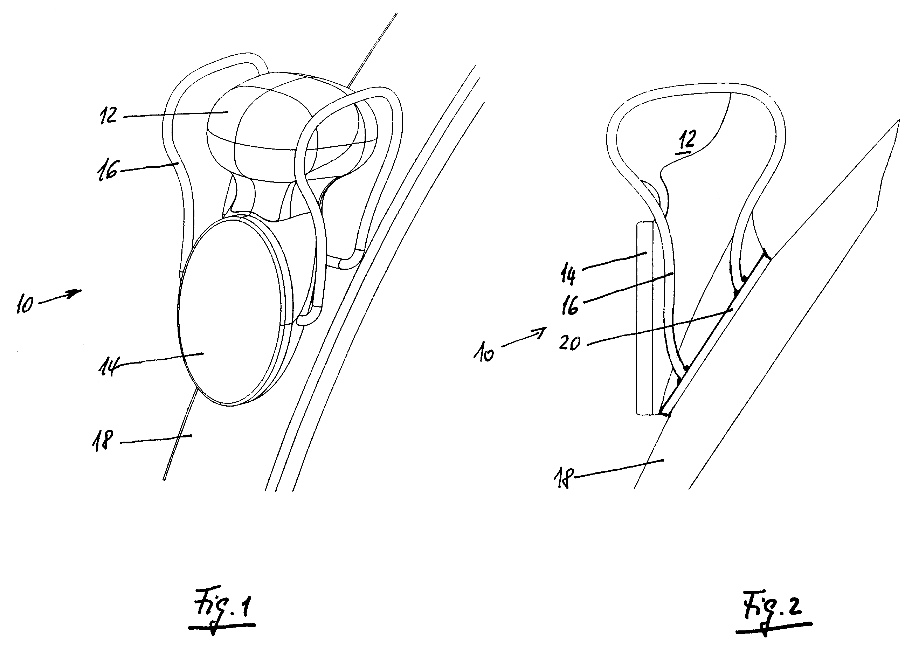

Von einer Rückleuchte 10 für ein Fahrzeug sind in Fig. 1 von aussen im wesentlichen eine die inneren optischen Elemente schützende Abdeck-Kalotte 12, ein Rückstrahlelement 14, auch Katzenauge genannt, und ein Paar von mechanischen Schutzbügeln 16, welche in der Rückleuchte 10 gehaltert sind zu sehen. Diese Rückleuchte 10 ist auf dem hinteren Schutzblech 18 eines Fahrrades befestigt.

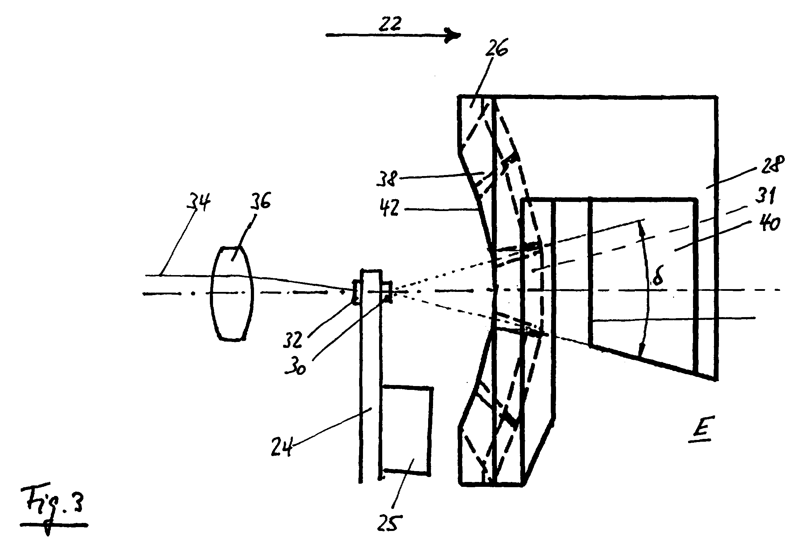

In der Ausführungsform gemäss Fig. 2 sind die mechanischen Schutzbügel 16 nicht an der Rückleuchte 10 gehaltert, sondern mit einer direkt auf dem hinteren Schutzblech 18 befestigten metallischen Halteplatte 20 verschweisst. Dies verleiht den mechanischen Schutzbügeln 16 eine wesentlich höhere Stabilität. Bei Schlägen oder dgl. wird die Rückleuchte 10 nicht von den Schutzbügeln 16 abgerissen, sie ist deshalb wesentlich besser geschützt.

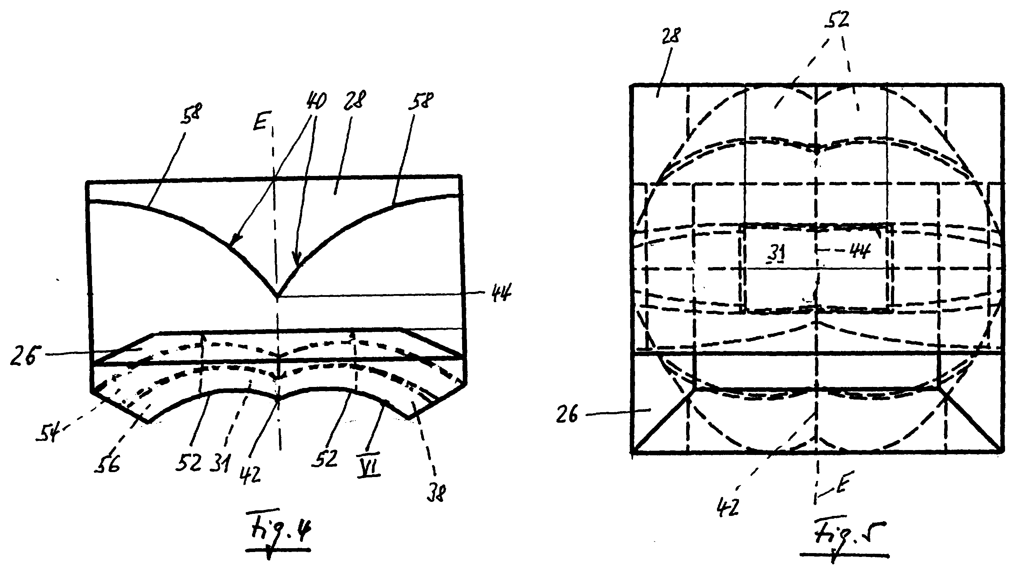

In Fig. 3 sind insbesondere die optischen Elemente einer Rückleuchte 10 (Fig. 1, 2) dargestellt. Die Fahrrichtung eines Fahrzeuges mit montierter Rückleuchte 10 ist mit einem Pfeil 22 dargestellt. Auf einem Träger 24, beispielsweise einem in der Halteplatte 20 (Fig. 2) verankerten Profil, sind zwei gegenüberliegende Leuchtdioden montiert. Eine in Richtung des ersten und zweiten Spiegels 26, 28 angeordnete, lichtschwache Standlicht-LED 30 und eine wesentlich lichtstärkere, in bezug auf die Fahrrichtung 22 direkt nach hinten gerichtete Fahrlicht-LED 32. Die Standlicht-LED 30 ist vorzugsweise eine oberflächenmontierte SMD, auch in Chip-Ausführung.

Ein beispielsweise eingezeichneter Lichtstrahl 34 der Fahrlicht-LED 32 durchquert eine Sammellinse 36, welche als Linsensystem ausgebildet ist. Die Lichtabstrahlung der Fahrlicht-LED 32 soll in der wesentlichsten Blickrichtung, bei einer montierten Fahrzeugrückleuchte von hinten, gebündelt werden. In an sich bekannter Weise wird die Fahrlicht-LED 32 von einem Kleingenerator gespeist.

Von wesentlicher Bedeutung ist die Gestaltung des ersten und zweiten Spiegels 26, 28, welche die Aufteilung der gesamten Lichtabstrahlung der lichtschwachen Standlicht-LED 30 nach den verlangten Abstrahlungsnormen ermöglichen.

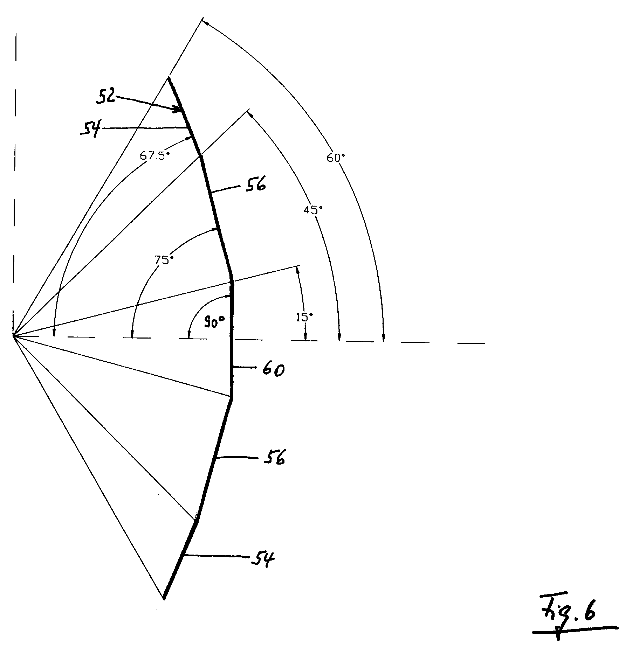

Die reflektierende Oberfläche 38, auch Reflexionsfläche genannt, des ersten Spiegels 26 hat zwei mathematisch berechnete und definierte Ausbuchtungen und eine erste Scheitellinie 42, welche in den folgenden Fig. 4 und 5 besser erkennbar sind. Der Spiegel 26 ist von einer Öffnung 31 durchgriffen, welche die von der Standlicht-LED 30 ausgestrahlte Lichtabstrahlung bezüglich der Vertikalen über einen Winkel δ durchtreten lässt. Das durchfliessende Licht fällt auf die reflektierende Oberfläche 40, zwei gekrümmte Scheitelflächen 40, welche in Fig. 4 und 5 besser erkennbar sind. Die Scheitelflächen 42 verlaufen im wesentlichen keilförmig und schneiden sich in einer zweiten geraden Scheitellinie 44. Die erste gekrümmte Scheitellinie 42 und die zweite gerade Scheitellinie 44 liegen auf einer Ebene E, welche mit der Ebene des Zeichnungsblattes identisch ist und auch durch die Standlicht-LED 30 verläuft.

Aus Fig. 4 ist die geometrische Form der reflektierenden Oberfläche 38 des ersten Spiegels 26 besser erkennbar. Zwei Ausbuchtungen 52 schneiden sich in der kammförmigen ersten Scheitellinie 42, welche, wie in Fig. 3 dargestellt, gekrümmt ist. In Querrichtung zur Ebene E durch die Scheitellinien 42, 44 verlaufen abgewinkelte bandförmige Zonen 54, 56, welche die Ausbuchtungen 52 unterteilen. Ein Schnitt durch eine Ausbuchtung parallel zur Ebene E ist in Fig. 6 dargestellt. Die reflektierende Oberfläche 40 des zweiten Spiegels 58 ist klar als zwei durch die Scheitellinie 44 getrennte, gekrümmte Scheitelflächen 58 erkennbar. Diese Scheitelflächen 58 haben in Blickrichtung gerade Mantellinien, eingeschlossen die zweite Scheitellinie 44. Durch die besser in Fig. 3 und insbesondere 5 erkennbare rechtwinklige Öffnung 31 im ersten Spiegel 26 kann der durchtretende Teil der Lichtabstrahlung auf den gekrümmten Scheitelflächen 58 plansymmetrisch von der Ebene E wegreflektiert werden.

In Fig. 5 ist die in Fig. 3 und 4 gezeigte Spiegelkombination von hinten betrachtet dargestellt. Es ist insbesondere die Öffnung 31 und die Form der Ausbuchtungen 52 des ersten Spiegels 26 gut erkennbar.

Fig. 6 zeigt einen Vertikalschnitt durch die Ausbuchtung an der Stelle VI von Fig. 4. Entlang dieser Schnittlinie sind abgewinkelte bandförmige Zonen 54, 56 und 60 ausgebildet. Die jeweiligen Winkel sind in Fig. 6 eingetragen. Die Abwinklung zwischen den bandförmigen Zonen kann eine Kante oder eine Abrundung sein. Der Verlauf der Ausbuchtung gemäss Fig. 6 kann über die ganze Breite der Ausbuchtungen 52 berechnet und aufgezeichnet werden.

**Patentansprüche**

1. Rückleuchte (10) für Fahrzeuge, insbesondere für Fahrräder, mit wenigstens einer Leuchtdiode (30,32), welche als Fahrlichtquelle (32) von einem Generator und als Standlichtquelle (30) von einem integrierten Elektronikmodul (25) mit Kondensator gespeist ist, einem Rückstrahlelement (14), einer Halteplatte (20) und einer transparenten Abdeck-Kalotte (12) mit optischen Elementen,
dadurch gekennzeichnet, dass
benachbart einer Standlicht-LED (30) ein erster Spiegel (26) mit zwei durch eine erste Scheitellinie (42) getrennten Ausbuchtungen (52) und einer diese gekrümmte Scheitellinie unterbrechenden Öffnung (31), und unmittelbar nach dieser Öffnung (31) ein zweiter Spiegel (28) mit zwei durch eine auf der Ebene (E) der ersten Scheitellinie (26) und der Standlicht-LED (30) liegenden, geraden zweiten Scheitellinie (44) getrennte Scheitelflächen (58) angeordnet sind, wobei die bezüglich der Ebene (E) plansymmetrisch ausgebildeten Ausbuchtungen (52) mit der Öffnung (31) und Scheitelflächen (58) zur Erzielung einer vorgegebenen Verteilung der Lichtabstrahlung mathematisch berechnet und definiert sind, und die Reflexion der Lichtabstrahlung in Richtung der Ebene (E) nur in einem beschränkten, kleinen Winkel, ausserhalb der Ebene (E) in einer mit zunehmendem Ablenkungswinkel abnehmender Intensität ($I_v$), erfolgt.

2. Rückleuchte (10) nach Anspruch 1, dadurch gekennzeichnet, dass die Ausbuchtungen (52) des ersten Spiegels (26) in Richtung der Ebene (E) eine Reflexionsabstrahlung in einem Winkel von ± (10 - 20)°, insbesondere von etwa ± 15°, senkrecht zur Ebene (E) eine Reflexionsabstrahlung in einem Winkel von ± (0 - 45)° erzeugen.

3. Rückleuchte (10) nach Anspruch 1 oder 2, dadurch gekennzeichnet, dass die Ausbuchtungen (52) des ersten Spiegels (26) senkrecht zur Ebene (E) 35 - 55%, vorzugsweise etwa 45%, der gesamten Lichtabstrahlung der Standlicht-LED (30) bis zu einem Winkel von etwa ± 15°, und 25 - 40%, vorzugsweise etwa 35%, der gesamten Lichtabstrahlung der Standlicht-LED (30) in einem Winkel von ± (15 - 45)° reflektieren, während die restlichen 10 - 30%, vorzugsweise etwa 20%, der gesamten Lichtabstrahlung durch die Öffnung (31) im ersten Spiegel (26) auf dem zweiten Spiegel (28) auftrifft.

4. Rückleuchte (10) nach einem der Ansprüche 1 bis 3, dadurch gekennzeichnet, dass die Ausbuchtungen (52) des ersten Spiegels (26) mehrere gegeneinander abgewinkelte bandförmige Zonen (54,56,60) umfassen, welche die Ebene (E) senkrecht schneiden.

5. Rückleuchte (10) nach einem der Ansprüche 1 bis 4, dadurch gekennzeichnet, dass die Öffnung (31) im ersten Spiegel (26) auf der Ebene (E) verlaufende Lichtstrahlen bis zu einem Winkel (δ) von (20 - 40)°, vorzugsweise bis etwa 30°, zur Ebene (E) senkrecht verlaufende Lichtstrahlen bis zu einem Winkel von (30 - 90)°, vorzugsweise etwa 60°, durchlässt.

6. Rückleuchte (10) nach einem der Ansprüche 1 bis 5, dadurch gekennzeichnet, dass die Öffnung (31) schlitzförmig, rechteckig, quadratisch, elliptisch oder kreisförmig ausgebildet ist.

7. Rückleuchte (10) nach einem der Ansprüche 1 bis 6, dadurch gekennzeichnet, dass die gekrümmten Scheitelflächen (58) des zweiten Spiegels (28) die durch die Öffnung (31) tretenden Lichtstrahlen in einem Winkel von ± (45 - 110)° reflektieren.

8. Rückleuchte (10) nach einem der Ansprüche 1 bis 7, dadurch gekennzeichnet, dass als Standlichtquelle eine oberflächenmontierte LED (30), auch in Chip-Ausführung, eingesetzt ist.

9. Rückleuchte (10) nach einem der Ansprüche 1 bis 8, dadurch gekennzeichnet, dass eine lichtstarke Fahrlicht-LED (32), welche über eine Sammellinse (36), ein Linsensystem, vorzugsweise in der transparenten Abdeck-Kalotte (12), die Lichtstärke durch Direktabstrahlung erhöht, auf dem Träger (24) der lichtschwachen Standlicht-LED (30), mit entgegengesetzter Lichtabstrahlungsrichtung, montiert ist.

10. Rückleuchte (10) nach einem der Ansprüche 1 bis 9, dadurch gekennzeichnet, dass wenigstens ein Schutzbügel (16) für die Abdeck-Kalotte (12) in der Halteplatte (20) verankert ist.

Fig.2

Fig.1

Fig. 3

Fig. 5

Fig. 4

Fig. 9

Europäisches
Patentamt

**EUROPÄISCHER RECHERCHENBERICHT**

Nummer der Anmeldung

EP 97 81 0467

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | DE 93 14 246 U (BUSH & MÜLLER)<br>* das ganze Dokument *<br>--- | 1 | B62J6/04 |
| A | EP 0 274 675 A (COMPAGNIE INDUSTRIELLE DES PILES ELECTRIQUES)<br>* Zusammenfassung; Abbildung 1 *<br>--- | 1 | |
| A,D | DE 42 24 061 A (BUSH & MÜLLER FAHRZEGTEILE FABRIK)<br>* Zusammenfassung; Abbildung 4 *<br>----- | 1 | |
| | | | RECHERCHIERTE SACHGEBIETE (Int.Cl.6) |
| | | | B62J |

Der vorliegende Recherchenbericht wurde für alle Patentansprüche erstellt

| Recherchenort | Abschlußdatum der Recherche | Prüfer |
|---|---|---|
| DEN HAAG | 13.Oktober 1997 | Onillon, C |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
..............................................................................................
& : Mitglied der gleichen Patentfamilie, übereinstimmendes
    Dokument

EPO FORM 1503 03.82 (P04C03)